# EUROPEAN PATENT APPLICATION

(11) **EP 4 321 281 A1**
(43) Date of publication of application: **14.02.2024**
(21) Application number: 23184589.2
(22) Date of filing: 11.07.2023
(51) Int. Cl.: B22F 10/28, B22F 10/47, B22F 10/66, B33Y 10/00, B33Y 40/00, B33Y 40/20

(54) **A METHOD OF MANUFACTURING A COMPONENT**

(30) Priority: 11.08.2022 GB 202211722
(71) Applicant: Rolls-Royce plc, London N1 9FX (GB)
(72) Inventor: Harding, Stephen, Derby, DE24 8BJ (GB); Morgan, Iain, Derby, DE24 8BJ (GB)
(74) Representative: Rolls-Royce plc

(57) **Abstract**

There is disclosed a method of manufacturing a component. The method comprises melting and fusing powder in layers from a build plate to form the component and a disposable support structure, heat treating the component; and removing the support structure. Each layer of the support structure and the component are formed such that there is at least a 10-micron gap between them, to ensure that the component and the support structure are not fused together.

## Description

The present invention relates to a method of manufacturing a component.

During additive manufacture of components, such as metal components, significant build stresses can arise which may distort the component. Conventionally, the part is constrained during the manufacture process using support structure to restrain any distortion until a stress relieving heat treatment cycle has been performed. Such support structures add cost to manufacture and have to be removed by machining or a manual method.

According to an aspect of the present disclosure, there is provided a method of manufacturing a component, the method comprising: melting and fusing powder in layers from a build plate to form the component and a disposable support structure, wherein each layer of the support structure and the component are formed such that there is at least a 10-micron gap between them, to ensure that the component and the support structure are not fused together; heat treating the component; and removing the support structure.

The component may be a metal component.

It may be that the support structure comprises a support surface facing the component and comprising a protruding arrowhead in a cross-section parallel to the build plate, wherein the arrowhead is formed on the support surface so as to restrain distortion of the component.

Having an arrowhead on the support surface enables a restraining part of the support surface to be deposited as close as 10 microns from the component whilst ensuring that the support surface is not fused with the component, such that it can be easily removed from the component. Powder will exist between the support structure, arrow head and component which will transmit force between the support structure and component during manufacture and up to the point of powder removal (prior to stress relieving heat treatment).

It may be that the support surface comprises a plurality of protruding arrowheads in cross-section parallel to the build plate. It may be that the plurality of arrowheads form a corrugated surface facing the component to restrain distortion of the component.

When the melting and fusing of powder is within a powder bed, the corrugated arrowheads help to trap powder between the support structure and the component and reduces the area of a region where the two parts are in close proximity. The small tip of the arrow head reduced the propensity for the support to fuse to the component (as would happen if two plane faces were in the same proximity).

It may be that the support structure comprises a plurality of support surfaces, each facing a different part of the component to restrain distortion of different parts of the component, optionally at different orientations.

It may be that the arrowhead protrudes by at least 50 microns from the support surface.

It may be that the smallest gap between the support structure and the component is at most 100 microns.

This smallest gap range ensures that distortion will be restrained, and improves retention of powder between the component and the support structure such that the powder between the component and the support structure can be used to transfer forces from the support structure to the component to minimise distortion of the component.

It may be that the support structure comprises holes configured to enable powder to be removed from between the support structure and the component.

It may be that the support structure comprises two substantially parallel and opposing support surfaces joined by a spine, in cross-section parallel to the build plate.

The support structure may have a substantially C-shaped or U-shaped cross section parallel to the build plate. This allows the support structure to restrain distortion in two opposing directions at once, which may be particularly advantageous when the component may distort in different directions along the depth of the component perpendicular to the build plate.

It may be that the support structure comprises, in cross-section parallel to the build plate, a hook structure comprising an elongate arm and a hook protruding from the elongate arm; wherein the hook is deposited to face a distortion surface of the component to restrain distortion of a portion of the component, the distortion surface being the surface of the component having the largest distortion in the predicted direction of distortion of the component; and wherein the elongate arm is deposited to extend from the hook in a direction having a vector component opposing the direction of distortion such that shrinkage of the elongate arm during additive manufacture brings the hook into contact with the component and provides a force to the portion of the component, via the hook, to minimise distortion of the portion of the component.

The skilled person will appreciate that except where mutually exclusive, a feature or parameter described in relation to any one of the above aspects may be applied to any other aspect. Furthermore, except where mutually exclusive, any feature or parameter described herein may be applied to any aspect and/or combined with any other feature or parameter described herein.

Embodiments will now be described, by way of example only, with reference to the accompanying Figures, in which:
**Figure 1** is a flow chart showing steps of a method of manufacturing a component; and
**Figures 2 to 5** schematically show a top view of first, second, third and fourth example build plate respectively building a component.

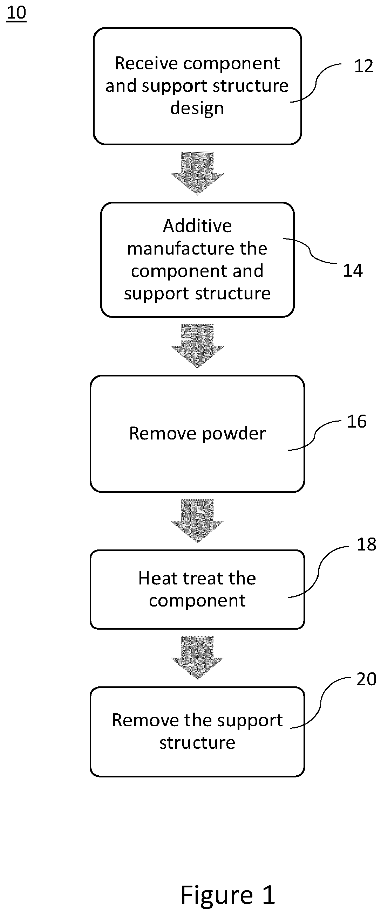

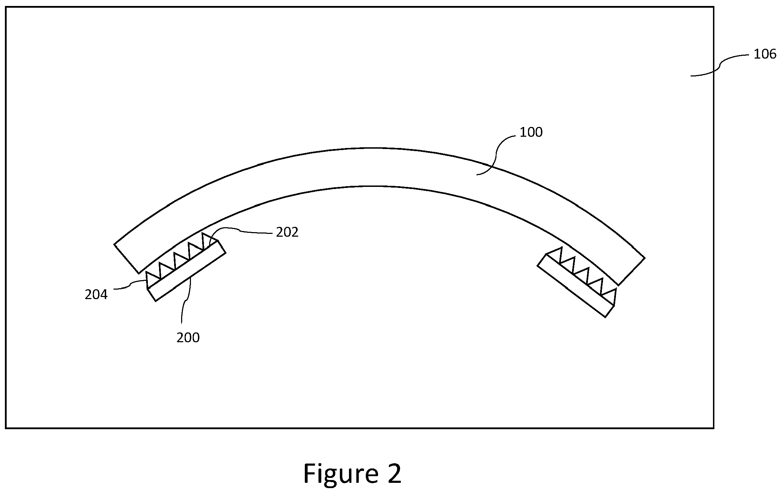

**Figure 1** is a flow chart showing steps of a method 10 of manufacturing a component 100. **Figures 2 to 5** show example implementations of the method 10 on a build plate 106.

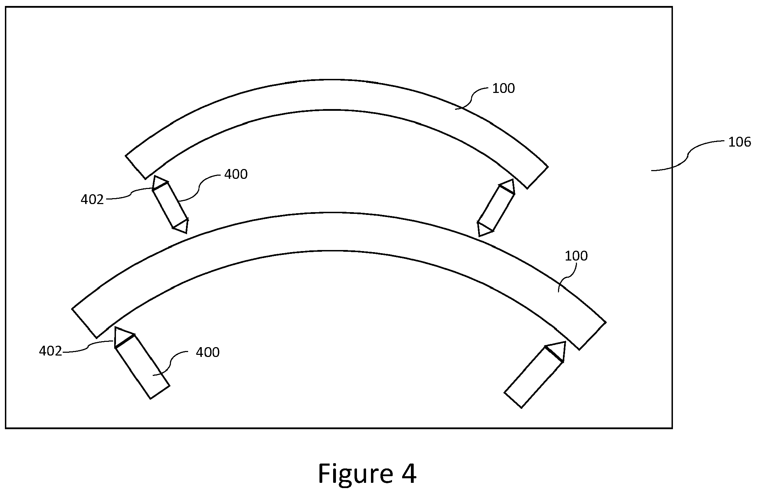

The method 10 begins at block 12, in which a component 100 design and a support structure 200, 300, 400, 500 design is received. In this example, the component 100 is a cylinder section, extending longitudinally (e.g., into the page in Figures 2 and 4) and along an arc. Therefore, in this example, the component 100 has a curvature in one direction, such that it has the same cross-section along a longitudinal direction. In other examples, the component may have curvature in more than one direction, or no curvature at all such that it is planar.

During additive manufacture of a component 100 by melting and fusing powder, for example by powder bed laser fusion, electron beam deposition, or blown powder deposition, material, such as metal, is melted and fused together on a build plate 106 in layers, to form a component 100, as shown in Figures 2-5. Figures 2, 3 and 5 show a single component 100 being manufactured, while Figure 4 shows multiple components 100 being manufactured. The layers of fused material are stacked in a build direction (out of the page in Figures 2-5). During this process, significant build stresses can arise which may distort the component 100. The support structure 200, 300, 400, 500 in Figures 2-5 may be designed to restrain distortion of the component 100 and are disposable.

In Figures 2-5, each layer of the support structures 200, 300, 400, 500 are designed to be deposited so that there is at least a 10-micron gap between the component 100 and a support surface 202 302, 402, 502 of the respective support structure 200, 300, 400, 500, which faces the component 100. This ensures that the component and the support structure are not fused together during manufacture, which means that the support structure 200, 300, 400, 500 can be removed from the component 100 after manufacturing without requiring an extra machining step. Powder will exist between the support structure 200, 300, 400, 500 and component 100. The powder will transmit force between the support structure 200, 300, 400, 500 and component 100 during manufacture thereby restraining distortion of the component 100 despite there being a gap between the support structure 200, 300, 400, 500 and the component 100.

In these examples, the smallest gap between the support structure 200, 300, 400, 500 and the component 100 is at most 100-microns. This ensures that distortion will be restrained to at most 100-microns, and improves retention of powder between the component 100 and the support structure 200, 300, 40, 5000 such that the powder between the component 100 and the support structure 200, 300, 400, 500 can be used to transfer forces from the support structure 200, 300, 400, 500 to the component 100 to minimise distortion of the component 100. In other examples, the smallest gap between the support structure 200, 300, 400, 500 and the component 100 may be any suitable size.

In each of the example support structures 200, 300, 400, 500, the support surface 202, 302, 402, 502 comprises a protruding arrowhead 204, 304, 404, 504 in a cross-section parallel to the build plate 106. Having an arrowhead on the support surface enables a restraining part of the support surface 202, 302, 402, 502 (i.e., the point of the arrowhead 204, 304, 404, 504) to be deposited as close as 10-microns from the component 100 whilst ensuring that the support structure 200, 300, 400, 500 is not fused with the component 100, such that it can be easily removed from the component 100. The arrowhead 204, 304, 404, 504 also helps to retain powder between the support structure 200, 300, 400, 500 and the component 100.

In this example, the arrowheads 204, 304, 404, 504 protrude between 50-1000 microns from the support surface of the 202, 302, 402, 502. Protruding 50-microns from the support surface 202, 302, 402, 502 enables the arrowheads 204, 304, 404, 504 to form a sufficiently small point to abut the component 100. Protruding more than 1000-microns from the support surface 202, 302, 402, 504 may make the arrowheads more susceptible to distortion and breakages or the part may distort unacceptably. In other examples, the arrowheads may protrude any suitable distance from the support surface.

In the first example implementation, shown in Figure 2, the support structure 200 is in the form of a simple buttress at each end of the component 100. The buttress extends along the end of the component 100, and comprises a plurality of protruding arrowheads 204 in a cross-section parallel to the build plate 106. In this example, the plurality of arrowheads 204 extend along the build direction to form a corrugated support surface facing the component 100 which restrains distortion of the component. When the melting and fusing of powder is within a powder bed, the corrugated arrowheads help to trap powder between the support structure and the component and reduces the area of a region where the two parts are in close proximity. The small tip of the arrowheads 204 reduce the propensity for the support to fuse to the component (as would happen if two plane faces were in the same proximity).

In other examples, the plurality of arrowheads may form a plurality of discrete features, such as cones or pyramids, which do not have an identical arrowhead extending through all cross-sections parallel to the build plate 106 (i.e., in the build direction). Such arrowheads are found to also be effective at restraining the component 100, and retaining powder between the support structure 200 and the component 100.

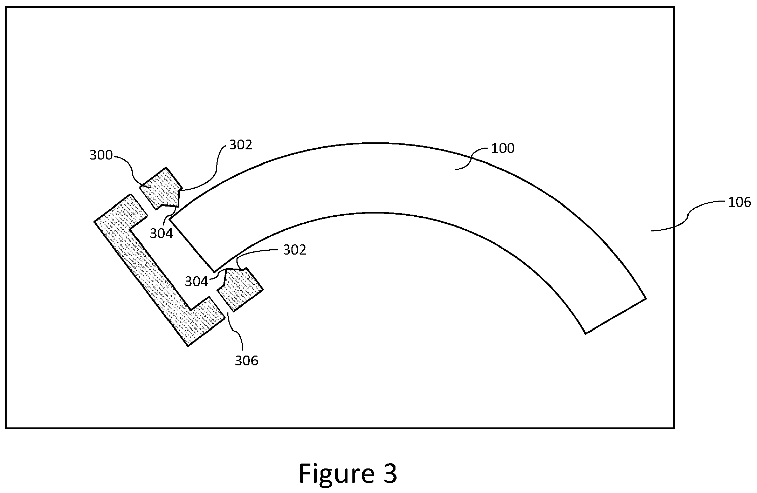

In the second example implementation, shown in Figure 3, the support structure 300 comprises a C-shaped, or U-shaped cross-sectional profile parallel to the build plate 106. The support structure 300 has two support surfaces 302 on the inside of the C-shape. In this example, the second example support structure 300 comprises two substantially parallel and opposing support surfaces 302 joined by a spine, in cross-section parallel to the build plate 106.

The two support surfaces 302 therefore support opposing sides of the component 100. This allows the support structure 300 to restrain distortion in two opposing directions at once, which may be particularly advantageous when the component may distort in different directions along the depth of the component 100 perpendicular to the build plate (i.e., in the build direction).

In other examples, the support structure may comprise any suitable number of support surfaces which may each face a different part of the component to restrain distortion of different parts of the component. In some examples, the different support surfaces may be in similar orientations, or in different orientations.

The second example support structure 300 comprises holes 306 which are configured to enable powder to be more easily removed from between the support structure 300 and the component 100 after manufacturing. In other examples, there may be no holes in the support structure 300, or such holes may be applied to the first example support structure 200, a third example support structure 400 or a fourth example support structure 500.

The third example support structures 400, shown in Figure 4, are configured to be deposited between multiple components 100, such that each support structure 400 is configured to restrain the distortion of more than one component 100. Each component 100 can then be used to restrain distortion of another component 100 by transferring forces between the powder and the support structures 400.

Referring back to Figure 1, after receiving the design of the component(s) 100 and support structure(s) 200, 300, 400, 500 the method 10 comprises block 14 in which the component(s) 100 and support structure(s) 200, 300, 400 are additive manufactured on the build plate 106 by melting and fusing powder in layers.

In block 16, the method 10 comprises removing the unfused powder from between the component 100 and the support structure 200, 300, 400, 500. When the powder is removed, the forces from the support structure 200, 300, 400, 500 are no longer transmitted to the component 100 via the powder. Therefore, the component 100 is allowed to distort until it abuts the support structure 200, 300, 400, 500. However, in this example, since the support structure is at most 100-microns from the surface of the component 100, the component 100 is only allowed to distort by a small amount, which is within a desirable threshold. Further, since the printing process is already complete, the part will not become welded to the support structure.

In some examples, a stress relieving heat treatment may be applied at a temperature below which the powder fuses and becomes difficult to remove. In this case the component can be stress relieved with powder in-situ to avoid distortion which would have been permitted on removal of the powder, where the forces are transmitted via the support structure and component being in direct contact.

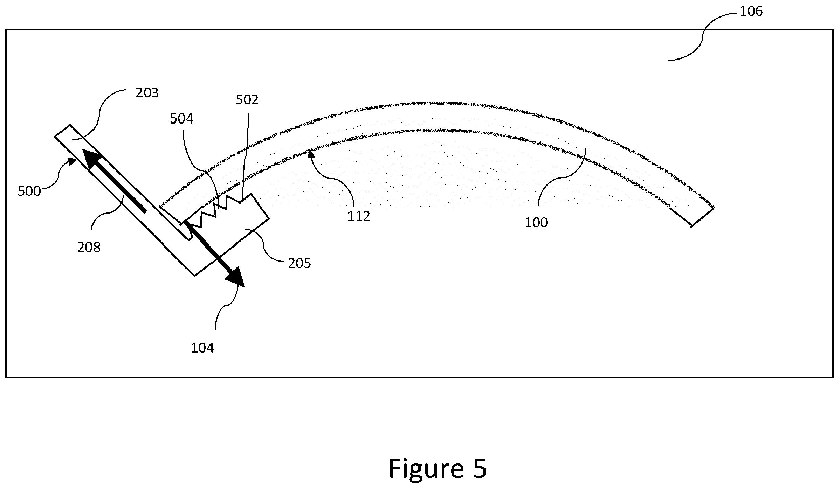

The support structure 200, 300, 400, 500 may also be susceptible to distortion during additive manufacture, and the distortion of the support structure can be advantageously designed to oppose the distortion of the component. For example, in **Figure 5****,** the fourth example support structure 500 comprises a hook structure including an elongate arm 203 and a hook 205 protruding from the elongate arm 203, in a cross-section parallel to the build plate 106. The hook 205 is designed to be deposited on the build plate 106 to face a distortion surface 112 of the component 100 to restrain distortion of the component 100 in a direction corresponding to a distortion vector 104. The hook 205 in this example is similar to the support structure described with reference to Figure 1.

The elongate arm 203 is designed to be deposited to extend from the hook 205 in an elongate direction 208 having a vector component opposing the direction of distortion 104. In this example, the elongate direction 208 is designed to be parallel to the vector component opposing the direction of distortion 104. In other examples, the elongate direction may not be parallel to the vector component opposing the direction of distortion.

Having the elongate direction 208 having a vector component which opposes the direction of distortion 104 means that shrinkage of the elongate arm 203 during additive manufacture may bring the hook 205 into contact with the component 100 and may provide an opposing force matching the force which would distort the component 100, thereby further minimising distortion of the portion of the component 100.

Therefore, shrinkage of the elongate arm 203 during manufacturing uses the distortion of the support structure 500 advantageously to abut the component 100 when the powder is removed, despite being deposited with a gap of at least 10-microns, such that the support structure 500 and the component 100 are not fused together.

In block 18, the method 10 comprises heat treating the component 100 together with the support structure 200, 300, 400, 500. Heat treatment typically relieves the built-up stresses in the manufactured component 100 and the support structure 200, 300, 400, 500 so that the support structure 200, 300, 400, 500 is no longer required to prevent distortion of the component 100.

In block 20, the method 10 comprises removing the support structure 200, 300, 400, 500 from the component 100, after the heat treatment in block 18. This can be done easily, and without machining, because the support structure 200, 300, 400, 500 was never fused with the component 100 during manufacture.

It will be understood that the invention is not limited to the embodiments above-described and various modifications and improvements can be made without departing from the concepts described herein. Except where mutually exclusive, any of the features may be employed separately or in combination with any other features and the disclosure extends to and includes all combinations and sub-combinations of one or more features described herein.

## Claims

1. A method (10) of manufacturing a component (100), the method (10) comprising:
melting and fusing powder in layers from a build plate (106) to form the component (100) and a disposable support structure (200,300,400,500), wherein each layer of the support structure (200,300,400,500) and the component (100) are formed such that there is at least a 10-micron gap between them, to ensure that the component (100) and the support structure (200,300,400,500) are not fused together;
heat treating the component (100); and
removing the support structure (200,300,400,500).

2. The method (10) according to Claim 1, wherein the support structure (200,300,400,500) comprises a support surface facing the component (100) and comprising a protruding arrowhead in a cross-section parallel to the build plate (106), wherein the arrowhead is formed on the support surface so as to restrain distortion of the component (100).

3. The method (10) according to Claim 2, wherein the support surface comprises a plurality of protruding arrowheads (204,304,404,504) in cross-section parallel to the build plate (106).

4. The method (10) according to Claim 3, wherein the plurality of arrowheads (204,304,404,504) form a corrugated surface facing the component (100) to restrain distortion of the component (100).

5. The method (10) according to any one of Claims 2 to 4, wherein the support structure (200,300,400,500) vcomprises a plurality of support surfaces, each facing a different part of the component (100) to restrain distortion of different parts of the component (100), optionally at different orientations.

6. The method (10) according to any one of Claims 2 to 5, wherein the arrowhead (204,304,404,504) vprotrudes by at least 50 microns from the support surface.

7. The method (10) according to any one of the preceding claims, wherein the smallest gap between the support structure (200,300,400,500) and the component (100) is at most 100 microns.

8. The method (10) according to any one of the preceding claims, wherein the support structure (300) comprises holes (306) configured to enable powder to be removed from between the support structure (200,300,400,500) and the component (100).

9. The method (10) according to any one of the preceding claims, wherein the support structure (300) comprises two substantially parallel and opposing support surfaces joined by a spine, in cross-section parallel to the build plate (106).

10. The method (10) according to any one of the preceding claims, wherein the support structure (500) comprises, in cross-section parallel to the build plate (106), a hook structure comprising an elongate arm (203) and a hook (205) protruding from the elongate arm (203);
wherein the hook (205) is deposited to face a distortion surface of the component (100) to restrain distortion of a portion of the component (100), the distortion surface being the surface of the component (100) having the largest distortion in the predicted direction of distortion of the component; and
wherein the elongate arm (203) is deposited to extend from the hook (205) in a direction having a vector component opposing the direction of distortion such that shrinkage of the elongate arm (203) during additive manufacture brings the hook (205) into contact with the component (100) and provides a force to the portion of the component (100), via the hook (205), to minimise distortion of the portion of the component (100).
